# EUROPÄISCHE PATENTSCHRIFT

(11) **EP 2 976 209 B1**
(45) Veröffentlichungstag und Bekanntmachung des Hinweises auf die Patenterteilung: **01.02.2017**
(21) Anmeldenummer: 14711739.4
(22) Anmeldetag: 19.03.2014
(51) Int. Cl.: B29C 59/04, B29C 63/02, B32B 37/22, B32B 38/18

(54) **FOLIENPRÄGEEINRICHTUNG**
FILM-EMBOSSING APPARATUS
DISPOSITIF D'ESTAMPAGE DE FILMS

(30) Priorität: 22.03.2013 DE 102013102984
(43) Veröffentlichungstag der Anmeldung: 27.01.2016
(73) Patentinhaber: Leonhard Kurz Stiftung & Co. KG, 90763 Fürth (DE)
(72) Erfinder: DRINIC, Ljubisa, 90445 Nürnberg (DE); TRIEPEL, Michael, 90766 Fürth (DE); FRIEDMANN, Ralf, 91578 Leutershausen-Erlbach (DE); MEIER, Thomas, 92237 Sulzbach-Rosenberg (DE)
(74) Vertreter: Louis Pöhlau Lohrentz
(86) Internationale Anmeldenummer: PCT/EP2014/055543
(87) Internationale Veröffentlichungsnummer: WO 2014/147146

(56) Entgegenhaltungen:
- EP-A1- 1 925 426
- EP-A2- 0 836 933
- EP-A2- 2 226 183
- WO-A1-2007/125508
- US-A1- 2004 177 917
- US-A1- 2005 022 938

## Beschreibung

Die Erfindung betrifft eine Folienprägeeinrichtung nach dem Oberbegriff des Anspruchs 1.

Mittels einer Folienprägeeinrichtung wird eine Heißprägefolie auf eine Oberfläche eines zu dekorierenden Werkstücks mittels eines Prägerades übertragen, wobei die Prozessparameter Prägetemperatur, Prägedruck, Prägezeit auf die Qualität des Heißprägens Einfluss haben. Bei dem zu dekorierenden Werkstück kann es sich beispielsweise um ein Kunststoffwerkstück handeln.

Bei der herkömmlichen Heißprägung wird ein Kunststoffwerkstück auf einen dem Werkstück angepassten Werkstückträger manuell aufgelegt und dort geklemmt. Anschließend wird der Werkstückhalter mit dem geklemmten Werkstück in eine Prägeposition gefahren und mit der Heißprägefolie beprägt.

Eine Folienprägeeinrichtung der genannten Art ist aus der DE 101 59 661 C1 bekannt. Ferner offenbart das Dokument US-A-2004/0177917 eine robotisch betriebene Prägevorrichtung. Das Dokument beschreibt eine Vorrichtung zum Aufbringen erwärmter Folien auf ein Substrat, wobei der Roboter sowohl die Folien als auch die Substrate einer statischen Prägevorrichtung zuführt.

Das Heißprägen großer Werkstücke entlang einer dreidimensionalen Kontur mit unterschiedlichen zueinander stehenden Prägeflächenwinkeln im Heißprägeabrollverfahren erfordert eine speziell für das Werkstück ausgebildete Prägevorrichtung, so dass unterschiedlich ausgebildete Werkstücke nicht auf ein und derselben Prägevorrichtung dekorierbar sind.

Aufgabe der vorliegenden Erfindung ist es, eine verbesserte Prägevorrichtung zu schaffen, die universell einsetzbar ist.

Erfindungsgemäß wird diese Aufgabe mit dem Gegenstand des Anspruchs 1 gelöst. Es wird eine Folienprägeeinrichtung zur Übertragung einer auf einer Trägerfolie angeordneten Übertragungslage einer Heißprägefolie auf eine Oberfläche eines Werkstücks mit einer Heißprägevorrichtung vorgeschlagen, die einen beheizbaren Prägestempel aufweist, wobei die Heißprägevorrichtung steuerungstechnische Ein- und Ausgänge aufweist, wobei vorgesehen ist, dass die Folienprägereinrichtung einen Industrieroboter mit steuerungstechnischen Ein- und Ausgängen aufweist,
dass die steuerungstechnischen Ein- und Ausgänge der Heißprägevorrichtung und des Industrieroboters mit einer Steuerungseinheit verbunden sind, und dass der Industrieroboter so ausgebildet ist, dass er
- das Werkstück der Heißprägevorrichtung zuführt,
- das Werkstück auf dem Prägestempel positioniert und/oder an dem Prägestempel entlangführt, und
- das geprägte Werkstück von der Heißprägevorrichtung abführt,
   oder
- die Heißprägevorrichtung dem Werkstück zuführt,
- den Prägestempel auf dem Werkstück positioniert und/oder an dem Werkstück entlangführt, und
- die Heißprägevorrichtung von dem geprägten Werkstück abführt.

Die erfindungsgemäße Folienprägeeinrichtung zeichnet sich dadurch aus, dass die Heissprägevorrichtung einen stromabwärts vor dem Prägestempel angeordneten ersten Folienführungshebel mit einer Folienführungsrolle und einen stromabwärts hinter dem Prägestempel angeordneten zweiten Folienführungshebel mit einer Folienführungsrolle aufweist, die mit dem Industrieroboter zusammenwirken.

Der Industrieroboter kann weiter so ausgebildet sein, dass er die auf das Werkstück übertragene Übertragungslage von der Trägerfolie abzieht.

Ein Industrieroboter wird vorzugsweise von einer Vorrichtung mit einem insbesondere armförmigen Manipulator, insbesondere einem Roboterarm gebildet. Vorzugsweise weist der Industrieroboter weiter einen Greifer und eine Steuerung auf. Die Bewegungsbahn des Manipulators und der Greifer sind vorzugsweise frei programmierbar. Ein Industrieroboter kann einen oder mehrere Sensoren aufweisen, die Signale an die Steuerung senden. Der Industrieroboter ist weiter vorzugsweise so ausgestaltet, dass er einen programmierten Arbeitsablauf selbständig ausführt und/oder in Abhängigkeit von Sensorinformationen in vorgegebenen Grenzen auch variiert. Derartige Sensorinformationen können beispielsweise von Abstandssensoren, Bewegungssensoren, Sensoren für Temperatur oder Druck oder Licht bereitgestellt werden, oder auch z. B. von Sensoren, die ein Ende der Folie detektieren und einen nötigen Folienwechsel anzeigen.

Die Folienführungshebel können als gefedert gelagerte und/oder längenverstellbare Schwenkhebel ausgebildet sein. Die Schwenkhebel können auch als pneumatisch verstellbare, elektrisch verstellbare und/oder hydraulisch verstellbare Schwenkhebel ausgebildet sein.

Alternativ kann vorgesehen sein, dass die Folienführungshebel als Schwenkhebel ausgebildet sind, die mittels einer elektronisch steuerbaren Stelleinrichtung verschwenkbar und/oder längenverstellbar sind. Damit ist es möglich, dass die Folienführungshebel Positionen einnehmen, die abhängig von der durch den Industrieroboter vorgegebenen Position des Werkstücks sind, um die ständige Anlage der Heißprägefolie an dem Werkstück im Bereich des Prägestempels und einer weiter unten beschriebenen Abkühlstrecke stromabwärts hinter dem Prägestempel herbeizuführen. Dadurch kann eine Anpassung der Folienprägeeinrichtung an unterschiedliche Werkstück-Geometrien und/oder unterschiedliche Prägeparameter erreicht werden.

Die Folienführungsrolle des zweiten Folienführungshebels kann als eine Ablösekante wirken, über welche die von der Übertragungslage abgelöste Trägerfolie abgeführt wird.

Es kann vorgesehen sein, dass zwischen der Trägerfolie und der Übertragungsschicht ein Ablösewinkel ausgebildet ist, der im Bereich von 8° bis 135°, bevorzugt von 10° bis 90° liegt. Der Ablösewinkel kann durch den Folienführungshebel und/oder durch externe elektronisch ansteuerbare Stellmittel einstellbar sein. Je nach verwendeter Prägefolie, verwendeten Prägeparametern oder Werkstück-Material kann die Anpassung des Ablösewinkels der Verbesserung der Prägequalität dienen. Mittels Ablösewinkel wird bestimmt, wie sich die Trägerfolie von der applizierten Übertragungslage ablöst bzw. trennt. Dabei kommt es darauf an, dass die bereits applizierte Übertragungslage nicht beschädigt oder wieder abgelöst wird und bei einer nur flächenbereichsweisen Applikation der Übertragungslage Randbereiche nicht oder nur wenig ausfransen.

Es kann weiter vorgesehen sein, dass zwischen dem Prägestempel und dem zweiten Folienführungshebel eine Abkühlstrecke ausgebildet ist. Beim Durchlaufen der Abkühlstrecke kühlt die auf das Werkstück übertragene Übertragungslage soweit ab, dass sie fest auf der Oberfläche des Werkstücks haftet und das Abziehen der Trägerfolie von der Übertragungslage keine Beschädigung der Übertragungslage herbeiführt. Die Abkühlzeit hängt vor allem von der Länge der Abkühlstrecke und der Vorschubgeschwindigkeit des Werkstücks ab.

Es kann vorgesehen sein, dass der Prägestempel als ein Prägerad ausgebildet ist. Das Prägerad kann zur vollflächigen Übertragung der Übertragungslage mit einer glatten Oberfläche ausgebildet sein. Es ist aber auch möglich, die Oberfläche des Prägerads zu strukturieren, so dass nur Bereiche der Übertragungsschicht übertragen werden. Diese Bereiche können ein Muster bilden, beispielsweise in Form eines Schriftzugs oder eines Logos oder einer geometrischen Form. Das Prägerad kann eine Oberfläche aus Silikon, beispielsweise mit einer Shore-Härte von 30° Shore A bis 100° Shore A oder aus Metall, z. B. Stahl oder Messing aufweisen.

Es kann vorgesehen sein, dass das Prägerad derart ausgebildet ist, dass es synchron zu dem Vorschub der Heißprägefolie und des Werkstücks rotiert. Das Prägerad kann einen steuerbaren Antrieb aufweisen. Es ist aber auch möglich, dass es durch das vorbei geführte Werkstück über die Heißprägefolie mitgenommen wird.

Der Industrieroboter kann einen Roboterarm mit 4 bis 15 Freiheitsgraden aufweisen, vorzugsweise mit fünf bis sieben Freiheitsgraden aufweisen. Der Roboterarm kann eine Werkstückaufnahme aufweisen.

Es kann vorgesehen sein, dass die Werkstückaufnahme als ein in das Werkstück eingreifender Balken ausgebildet ist. Die Werkstückaufnahme kann in ihrer Kontur an das Werkstück angepasst sein.

Die Werkstückaufnahme kann Vakuumsauger aufweisen, die mit der Innenseite des Werkstücks zusammenwirken.

Die Werkstückaufnahme kann weiter Klemmzylinder und/oder Werkstückausstoßer aufweisen, die mit der Innenseite des Werkstücks zusammenwirken.

Es kann vorgesehen sein, dass die Werkstückaufnahme und/oder das Werkstück Führungselemente und/oder Sensoren aufweisen bzw. aufweist, die eine reproduzierbare Lagezuordnung zwischen der Werkstückaufnahme und dem Werkstück herbeiführen.

Es kann aber auch eine Werkstückaufnahme mit beweglichen Elementen vorgesehen sein, die entsprechend der Werkstückkontur einstellbar sind. Eine solche Werkstückaufnahme kann beispielsweise als ein Greifer mit Greiffingern ausgebildet sein.

Es kann auch vorgesehen sein, dass an dem Roboterarm die Heißprägevorrichtung angeordnet ist. Eine derartige Ausführung kann beispielsweise vorgesehen sein, um die Stirnseiten plattenförmiger Werkstücke zu dekorieren. Die Werkstücke können mittels eines Transportbandes zu- und abgeführt werden.

An dem Roboterarm und/oder an der Heißprägevorrichtung kann eine Positionierungseinrichtung angeordnet sein. Die Positionierungseinrichtung kann Steuersignale für den Industrieroboter und/oder die Steuerungseinheit ausgeben. Die Positionierungseinrichtung kann beispielsweise als eine optische Positionierungseinrichtung ausgebildet sein, die zum Beispiel mittels eines auf das Werkstück gestrahlten und von diesem reflektierten Laserstrahls arbeitet. Es ist aber auch möglich, ein Bilderfassungssystem, z. B. eine Kamera mit Bildverarbeitungssoftware zu verwenden, das auch separat angeordnet sein kann.

Die Steuerungseinheit kann als eine zentrale Steuerungseinheit ausgebildet sein. In diesem Fall arbeitet die Steuerungseinheit als ein sogenannter "Master" und die Heißprägeinrichtung und der Industrieroboter arbeiten als sogenannter "Slave". Der "Master" ist die übergeordnete Steuerungseinheit, der Aktionskommandos an als "Slave" bezeichnete untergeordnete Steuerungseinheiten gibt und durchgeführte Aktion abfragt.

Es ist auch möglich, dass auf eine separate Steuerungseinheit verzichtet wird und stattdessen der Industrieroboter oder die Heißprägevorrichtung als "Master" arbeiten. In diesen Fällen kann die Steuerungseinheit in den Industrieroboter oder die Heißprägevorrichtung integriert sein. Beispielsweise kann die Heißprägevorrichtung als "Master" arbeiten, um besonders einfach an verschiedene Industrieroboter-Typen anpassbar zu sein.

Die Steuerungseinheit kann so ausgestaltet sein, dass sie den Industrieroboter so ansteuert, dass das Werkstück während des Prägens mit zumindest abschnittsweise und/oder zeitweise konstanter Kraft auf den Prägestempel gedrückt wird oder umgekehrt. Der Betrag der Kraft kann in unterschiedlichen Abschnitten des Werkstücks unterschiedlich sein.

Es kann vorgesehen sein, dass ein Drucksensor, der mit der Steuerungseinheit verbunden ist, an dem Roboterarm und/oder an der Werkstückaufnahme angeordnet ist. Die Steuereinheit oder eine Steuerung des Industrieroboters weist vorzugsweise einen Regler auf, der basierend auf den von dem Drucksensor empfangenen Daten und ggf. von anderen Sensoren empfangenen Daten den Roboterarm so ansteuert, dass während des Prägens das Werkstück mit konstanter Kraft auf den Prägestempel gedrückt wird.

Eine solche konstante Kraft ist vorteilhaft, um die Prägebedingungen insgesamt für einen definierten Zeitraum möglichst konstant zu halten, d. h. Prägekraft, Prägetemperatur zusammen mit einer konstanten Vorschubgeschwindigkeit des Werkstücks und/oder des Prägestempels. Es kann aber ebenfalls vorteilhaft sein, abhängig von der Werkstück-Geometrie, abschnittweise unterschiedliche Kräfte einzustellen, beispielsweise weil an dem Werkstück abschnittweise unterschiedliche Oberflächenbeschaffenheiten vorliegen oder die Prägefläche abschnittweise variiert. Beispielsweise ist es vorteilhaft, die Prägekraft zu erhöhen, wenn die zu prägende Fläche vergleichsweise groß ist bzw. die Prägekraft zu verringern, wenn die zu prägende Fläche vergleichsweise klein ist. Ein Beispiel dafür ist ein zu prägender Rand des Werkstücks, dessen Breite abschnittweise variiert.

Ein Abschnitt der Werkstück-Oberfläche, auf dem die Prägebedingungen und damit auch die Prägekraft konstant gehalten werden sollen, weist also insbesondere eine einheitliche Oberflächenbeschaffenheit, beispielsweise Rauigkeit oder Material oder Strahlungsabsorptionsvermögen, auf. Weiter ist die Prägefläche entlang dieses Abschnitts vorzugsweise konstant.

Es ist weiter vorteilhaft, dass die Steuereinheit den Industrieroboter so ansteuert, dass das Werkstück während des Prägens mit einer Kraft auf den Prägestempel gedrückt wird oder umgekehrt, die abhängig von der Oberflächenbeschaffenheit und/oder der Größe der zu prägenden Fläche des Werkstücks oder des jeweiligen zu prägenden Abschnitts des Werkstücks ist.

Unter einem Abschnitt eines Werkstücks, in welchem insbesondere die Kraft, mit der das Werkstück gegen den Prägestempel gedrückt wird oder umgekehrt, konstant ist, ist vorzugsweise ein Teilbereich der Oberfläche des Werkstücks zu verstehen, in welchem die Oberflächenbeschaffenheit der Oberfläche in Bezug auf ein oder mehrere Parameter konstant ist, insbesondere in Bezug auf die Oberflächenrauhigkeit, Materialbeschaffenheit der Oberfläche und/oder optische Eigenschaften der Oberfläche (z. B. Absorptionsvermögen, Farbe) konstant ist.

Es ist möglich, dass für die steuerungstechnische Kommunikation ein BusSystem verwendet wird, das eine permanente Kommunikation einschließlich eines Soll-Ist-Vergleichs zwischen den einzelnen Steuerungskomponenten ermöglicht. Dadurch ist eine Echtzeitsteuerung möglich.

Die Erfindung wird nun anhand von Ausführungsbeispielen näher erläutert. Es zeigen
- Fig. 1: ein erstes Ausführungsbeispiel der erfindungsgemäßen Folienprägeeinrichtung in einer perspektivischen Darstellung;
- Fig. 2: die Folienprägeeinrichtung in Fig. 1 in einer Vorderansicht in Sichtrichtung II in Fig. 1;
- Fig. 3: die Werkstückaufnahme in Fig. 1 in einer Vorderansicht;
- Fig. 4: die Werkstückaufnahme in Fig. 3 in einer perspektivischen Darstellung;
- Fig. 5: die Werkstückaufnahme in Fig. 4 mit aufgenommenem Werkstück in einer perspektivischen Darstellung;
- Fig. 6: die Prägeeinheit in Fig. 1 in einer Vorderansicht in Sichtrichtung VI in Fig. 1;
- Fig. 7: ein zweites Ausführungsbeispiel der erfindungsgemäßen Folienprägeeinrichtung in einer schematischen Darstellung;
- Fig. 8: ein Blockschaltbild eines ersten Ausführungsbeispiels einer Steuerungseinheit der Folienprägeeinrichtung in Fig. 1;
- Fig. 9: ein Blockschaltbild eines zweiten Ausführungsbeispiels einer Steuerungseinheit der Folienprägeeinrichtung in Fig. 1;
- Fig. 10: ein Blockschaltbild eines dritten Ausführungsbeispiels einer Steuerungseinheit der Folienprägeeinrichtung in Fig. 1;
- Fig. 11: eine erste schematische Darstellung einer Prägeeinheit mit Zugwerk und ohne Tänzer;
- Fig. 12: eine zweite schematische Darstellung einer Prägeeinheit mit Zugwerk und mit Tänzer.

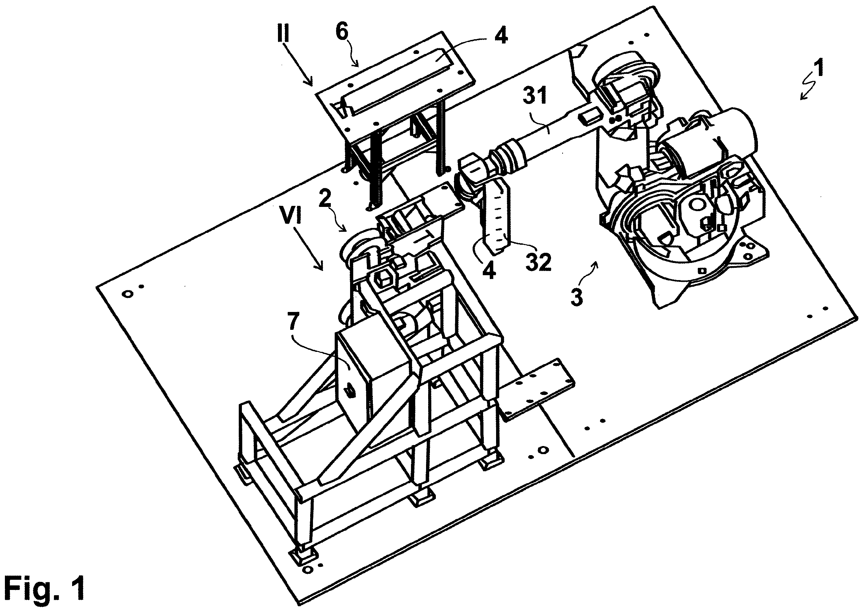

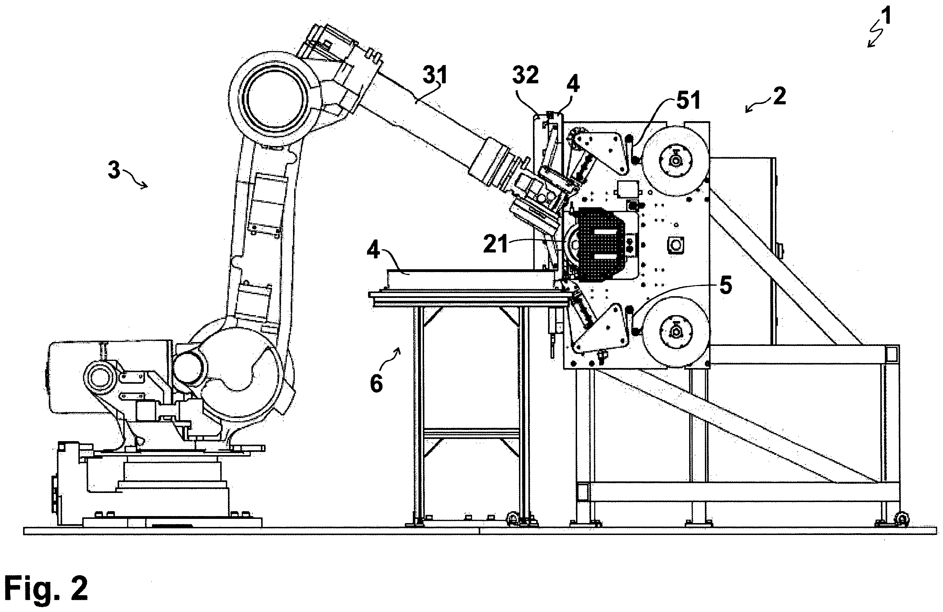

Die Fig. 1 und 2 zeigen eine Folienprägeeinrichtung 1, umfassend eine Heißprägevorrichtung 2 und einen Industrieroboter 3, der ungeprägte Werkstücke 4 von einer Lagereinrichtung 6 zu der Heißprägevorrichtung 2 zuführt und geprägte Werkstücke 4 von der Heißprägevorrichtung 2 abführt.

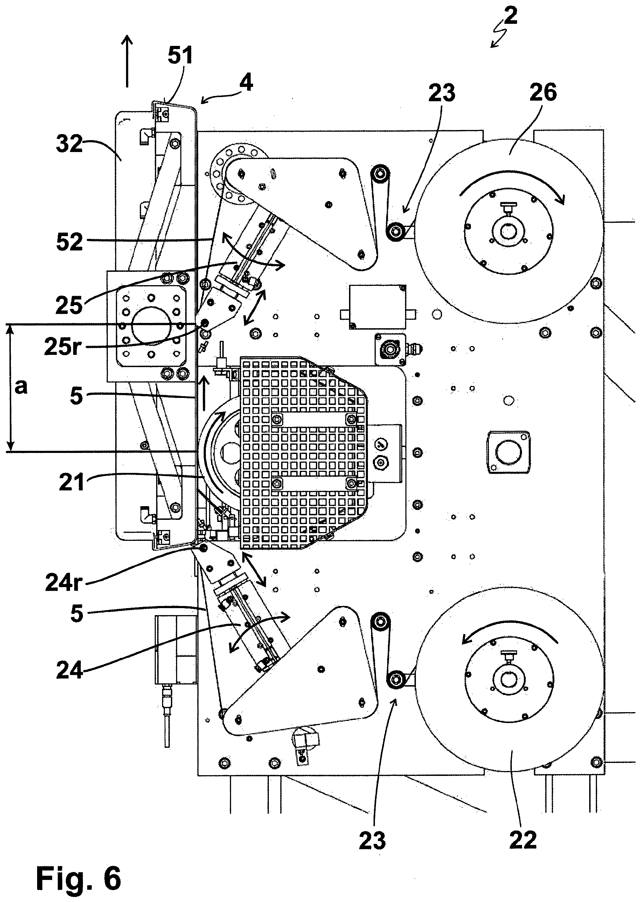

In der Folienprägeeinrichtung 1 wird zumindest abschnittsweise eine Übertragungslage 51 (siehe Fig. 6) einer Heißprägefolie 5 mittels eines beheizten Prägestempels auf das Werkstück 4 übertragen. Bei der Übertragungslage 51 kann es sich um eine Dekorlage handeln, die beispielsweise die Anmutung eines Holzfurniers aufweisen kann. Die Übertragungslage 51 ist auf einer Trägerfolie 52 angeordnet. Weiter kann zwischen der Trägerfolie 52 und der Übertragungslage 51 eine Trennschicht angeordnet sein, die das Ablösen der Übertragungslage 51 von der Trägerfolie 52 erleichtert. Die Übertragungslage 51 kann insbesondere mehrere dekorative Schichten, beispielsweise opake oder transluzente oder transparente Farbschichten und/oder metallisierte Schichten und/oder optisch variable Schichten aufweisen. Zusätzlich können Schutzschichten zur Erhöhung der Beständigkeit der Übertragungslage 51 gegen äußeren Einflüsse und/oder Haftvermittlerschichten zur Verbesserung der Haftung zwischen anderen Schichten vorgesehen sein. Die Übertragungslage 51 kann zusätzlich oder alternativ funktionale Schichten, insbesondere optisch und/oder elektrisch und/oder elektronisch funktionale Schichten aufweisen, z. B. aus Metallen, Halbleitern oder nichtleitenden Schichten. Diese funktionalen Schichten können beispielsweise elektrische oder elektronische Bauelemente, Antennenelemente, Elektroden, photosensitive Schichten, lichtaussendende Schichten, strahlungspolarisierende Schichten, fluoreszierende Schichten, phosphoreszierende Schichten oder ähnliches sein. Die dekorativen oder funktionalen Schichten können beispielsweise aus thermoplastischen oder strahlenhärtenden Polymeren gebildet sein. Die Trägerfolie 52 kann beispielsweise aus Polyethylenterephtalat (Polyethylenterephtalat = PET)-Folie sein, kann aber auch eine transparente oder teilweise transparente andere Kunststofffolie sein, beispielsweise eine Folie aus einem Polyolefin wie Polyethylen (PE), Polypropylen (PP), Polyvinylchlorid (PVC), Polystyrol (PS), Polyester (PE) und/oder Polycarbonat (PC) oder beispielsweise aus PMMA, Polyamid oder Polyimid.

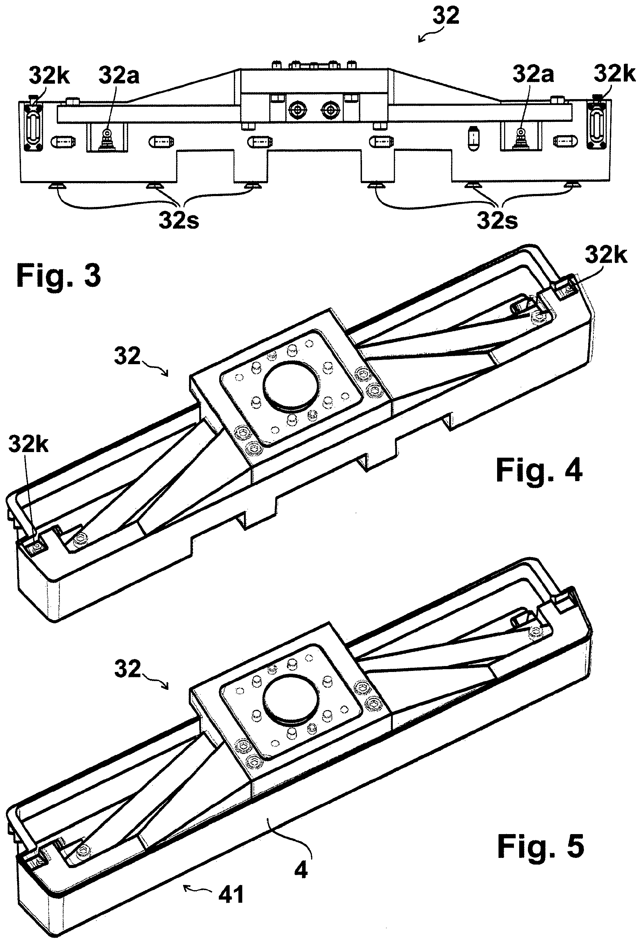

Der Industrieroboter 3 weist einen Roboterarm 31 auf, der in dem dargestellten Ausführungsbeispiel in fünf Freiheitsgraden beweglich ist. Es ist möglich, dass der Roboterarm 31 auch mehr oder weniger als fünf Freiheitsgrade aufweist. An einem Endabschnitt des Übertragungsarms 31 ist eine Werkstückaufnahme 32 angeordnet. Die Werkstückaufnahme 32 ist als ein Balken ausgebildet, an dem Vakuumsauger 32s, Klemmzylinder 32k und Werkstückausstoßer 32a angeordnet sind. Die Fig. 3 und 4 zeigen die Werkstückaufnahme 32 in einer Lage, in der sie auf das Werkstück 4 zum Ergreifen des Werkstücks aufsetzbar ist. Fig. 5 zeigt die Werkstückaufnahme 32 mit aufgenommenem Werkstück 4, wobei die Werkstückaufnahme in dem als Hohlformteil ausgebildeten Werkstück 4 angeordnet ist. Das Werkstück 4 wird mittels der Vakuumsauger 32s angesaugt und mittels der Klemmzylinder 32k auf der Werkstückaufnahme 32 geklemmt. Die Werkstückausstoßer 32a lösen das geprägte Werkstück 4 wieder von der Werkstückaufnahme 32.

In dem in Fig. 1 bis 6 dargestellten Ausführungsbeispiel ist die Heißprägevorrichtung 2 als Rollenprägeeinrichtung ausgebildet, bei der der Prägestempel als ein Prägerad 21 ausgebildet ist. Es kann aber auch eine Heißprägevorrichtung mit einem plattenförmigen Prägestempel vorgesehen sein. Bei dem plattenförmigen Prägestempel kann es sich auch um einen Prägestempel mit beweglichen Elementen handeln.

Der Industrieroboter 3 positioniert das zu beprägende Werkstück 4, das eine dreidimensionale Prägefläche aufweisen kann, in allen Abschnitten der Prägefläche so, dass die Prägefläche zumindest abschnittweise parallel zur Heißprägefolie 5 und zumindest abschnittweise parallel zu dem Umfang des Prägerades 21 ausgerichtet ist.

Der Industrieroboter 3 drückt das Werkstück 4 auf das Prägerad 21 und übt dabei eine Prägekraft aus bzw. erzeugt in der Prägefläche einen Prägedruck. Das Prägerad 21 wirkt in dem dargestellten Ausführungsbeispiel als starres Widerlager. Es ist aber auch möglich, dass das Prägerad 21 gefedert gelagert ist, und so nötigenfalls in geringem Maße zurückweichen kann. In einer weiteren Ausbildung kann das Prägerad 21 in seiner Lage und Position hydraulisch, pneumatisch, elektrisch und/oder mechanisch, automatisch oder/und manuell, einstellbar sein, um sich ebenfalls an den Ablauf und an die Bauteilgeometrie anzupassen. Vorzugsweise kann der Roboterarm 31 mit einem Kraft- bzw. Drucksensor ausgebildet sein und durch eine auf die Prägefläche gerichtete Zustellbewegung die Prägekraft erzeugen. Die erzeugte Prägekraft ist dabei vorzugsweise über einen definierten Zeitraum bzw. über einen definierten Abschnitt der Werkstück-Oberfläche konstant, um zusammen mit den übrigen Prägeparametern Temperatur und Vorschubgeschwindigkeit des Werkstücks konstante Gesamtbedingungen zu schaffen. An einem anderen, insbesondere benachbarten Abschnitt bzw. in einem anderen definierten Zeitraum, können wiederum andere konstante Bedingungen eingestellt werden, was auch eine anders eingestellte konstante Prägekraft umfassen kann.

Weiter führt der Industrieroboter 3 das Werkstück 4 an dem Prägerad 21 vorbei, das heißt er führt den Vorschub des Werkstücks 4 durch.

Auf die Qualität des Heißprägens haben die Prozessparameter Prägetemperatur, Prägedruck bzw. Prägekraft, Prägezeit bzw. Vorschubgeschwindigkeit und Abkühlzeit wesentlichen Einfluss.

Folgende Wertebereiche der drei charakteristischen Prozessparameter haben sich bewährt:

| | |
|---|---|
| Prägetemperatur: | 160 °C bis 220 °C, bevorzugt 190 °C bis 210 °C |
| Prägekraft: | 600 N bis 1600 N, bevorzugt 900 N bis 1200 N |
| Vorschubgeschwindigkeit: | 1,2 m/min bis 6 m/min, bevorzugt 3 m/min bis 3,5 m/min |

Nach dem Prägen der Heißprägefolie 5 ist es erforderlich, dass eine Abkühlstrecke a (siehe Fig. 6) durchlaufen wird. Beim Durchlaufen der Abkühlstrecke a kühlt die auf das Werkstück 4 übertragene Übertragungslage 51 der Heißprägefolie 5 soweit ab, dass die Übertragungslage 51 nicht mehr von dem Werkstück 4 ablösbar ist. Danach kann die Trägerfolie 52 von der applizierten Übertragungslage 51 ohne Qualitätseinbuße an der applizierten Übertragungslage 51 abgezogen werden.

Fig. 6 zeigt den Aufbau der Heißprägevorrichtung 2 im Einzelnen.

Die Heißprägefolie 5 ist auf einer Vorratsrolle 22 angeordnet und durchläuft sodann einen ersten Tänzer 23. Bei dem Tänzer 23 handelt es sich um eine Vorrichtung, die den Folienzug konstant hält. Der Tänzer 23 weist eine gestellfeste Umlenkrolle und eine gefederte Umlenkrolle auf, die von der Heißprägefolie 5 S-förmig umschlungen sind. Stromabwärts hinter dem Tänzer 23 ist ein erster Folienführungshebel 24 angeordnet. Der Folienführungshebel 24 ist an seinem einen Endabschnitt schwenkbar gelagert und weist an seinem anderen Endabschnitt ein oder mehrere Führungsrollen 24r auf, über welche die Heißprägefolie 5, optional anhand der Anforderungen, geführt ist. Der Folienführungshebel 24 ist in seiner Länge verstellbar, wie in Fig. 6 durch einen geraden Richtungspfeil angedeutet.

Der Folienführungshebel 24 legt die Heißprägefolie 5 bereits vor dem Prägerad 21 an das Werkstück 4 an. Der Folienführungshebel 24 kann als ein gefederter, pneumatisch verstellbarer, elektrisch verstellbarer und/oder hydraulisch verstellbarer Hebel ausgebildet sein oder mittels einer elektronisch steuerbaren Stelleinrichtung verschwenkt und/oder entlang seiner Längsachse ein- und ausgefahren werden. Bei Kurvenfahrten sorgt der Folienführungshebel 24 dafür, dass die Heißprägefolie 5 um den kompletten Eckenradius des Werkstücks 4 mit entsprechender Vor- und Nachlaufstrecke anliegt und geprägt werden kann.

Stromabwärts hinter dem Folienführungshebel 24 ist das Prägerad 21 angeordnet. Das beheizte Prägerad 21 erwärmt die zwischen dem Prägerad 21 und dem Werkstück 4 hindurch geführte Heißprägefolie 5, so dass ein auf der Übertragungslage 51 aufgebrachter thermoplastischer Kleber aktiviert wird sowie gegebenenfalls eine optionale Ablöseschicht zwischen der Trägerfolie 52 und der Übertragungslage 51 aktiviert wird und die Übertragungslage 51 auf dem Werkstück 4 fixiert. Wenn es sich um ein unprofiliertes Prägerad 21 handelt, kann die gesamte Übertragungslage 51 auf das Werkstück 4 übertragen werden, beispielsweise um die Kanten eines Paneels zu dekorieren.

Dabei kann jedoch die Übertragungslage 51 jedoch auch nur teilweise auf das Werkstück 4 übertragen, wenn beispielsweise die Kante am Werkstück 4 etwas schmaler ist als die Heißprägefolie 5, was vorteilhaft sein kann, um Toleranzen bei der Zuführung der Heißprägefolie 5 zu dem Prägerad 21 auszugleichen. Es kann aber auch ein profiliertes Prägerad 21 vorgesehen sein, das nur Bereiche der Übertragungslage 51 auf das Werkstück 4 überträgt. Die übertragenen Bereiche können beispielsweise ein Muster bilden.

Die Umfangsgeschwindigkeit des Prägerades 21 ist betragsmäßig der Vorschubgeschwindigkeit der Heißprägefolie 5 und des Werkstücks 4 gleich, das heißt die Relativgeschwindigkeit zwischen den genannten Komponenten ist gleich Null.

Stromabwärts hinter dem Prägerad 21 ist ein zweiter Folienführungshebel 25 angeordnet. An einer Führungsrolle 25r des zweiten Folienführungshebels 25 wird die Trägerfolie 52 von der auf das Werkstück 4 übertragenen Übertragungsschicht 51 abgelöst, wobei gleichzeitig nicht übertragene Bereiche der Übertragungsschicht 51 abgelöst werden. Zwischen der Trägerfolie 52 und der applizierten Übertragungsschicht 51 ist ein Ablösewinkel α ausgebildet, der beispielsweise im Bereich von 8° bis 135°, bevorzugt 10° bis 90° sein kann. Der einzustellende Ablösewinkel α kann von den Materialeigenschaften und/oder der Vorschubgeschwindigkeit der Heißprägefolie 5 abhängen. Der Abstand zwischen der Führungsrolle 25r und einem zwischen dem Prägerad 21 und der Heißprägefolie 5 ausgebildeten linienförmigen Kontaktbereich bildet die weiter oben beschriebene Abkühlstrecke a.

Stromabwärts hinter dem zweiten Folienführungshebel 25 sind ein zweiter Tänzer 23 und eine Aufwickelrolle 26 angeordnet.

Zur Steuerung der Heißprägevorrichtung 2 und des Industrieroboters 3 ist eine elektronische Steuerungseinheit 7 vorgesehen. Die Steuerungseinheit 7 kann beispielsweise an der Heißprägevorrichtung 2 angeordnet sein, wie in Fig. 1 dargestellt.

Die Steuerungseinheit 7 realisiert folgenden Verfahrensablauf:
a) Der Industrieroboter 3 fährt in eine Aufnahmeposition und greift in der Lagereinrichtung 6 bereitgestelltes ungeprägtes Werkstück 4 mittels der Vakuumsauger 32s und der Klemmzylinder 32k.
b) Der Industrieroboter 3 fährt mit dem Werkstück 4 an die Heißprägevorrichtung 2 heran und prägt das Werkstück 4 in einer Prägekonturfahrt mit zumindest abschnittweise oder zeitweise konstanter Prägekraft entlang der vorgegebenen Werkstückkontur am beheizten Prägerad 21.
c) Während der Prägekonturfahrt werden die beiden Folienführungshebel 24 so bewegt, dass sowohl bei Kurvenfahrten als auch bei ebenen Flächenfahrten die Heißprägefolie 5 jederzeit am Werkstück 4, der Prägung vor- und nachlaufend, anliegt.
d) Nach der Prägung fährt der Industrieroboter 3 mit dem Werkstück 4, an dem die Heißprägefolie 5 anliegt, die Abkühlstrecke a ab.
e) Am Ende der Abkühlstrecke wird die Trägerfolie 52 von der auf das Werkstück 4 übertragenen Übertragungslage 51 abgelöst.
f) Der Industrieroboter 3 fährt in eine Ablageposition und trennt das geprägte Werkstück 4 von der Werkstückaufnahme 32:
   - die Klemmzylinder 32k werden eingefahren,
   - die Vakuumsauger 32s werden abgeschaltet,
   - die Werkstückausstoßer 32a drücken das Werkstück 4 von der Werkstückaufnahme 32.
g) Der Industrieroboter 3 fährt in seine Ausgangsposition zurück.

Die Kommunikation der einzelnen Betriebszustände kann über die steuerungstechnischen Ein- und Ausgänge des Industrieroboters 3 und der Heißprägevorrichtung 2 erfolgen.

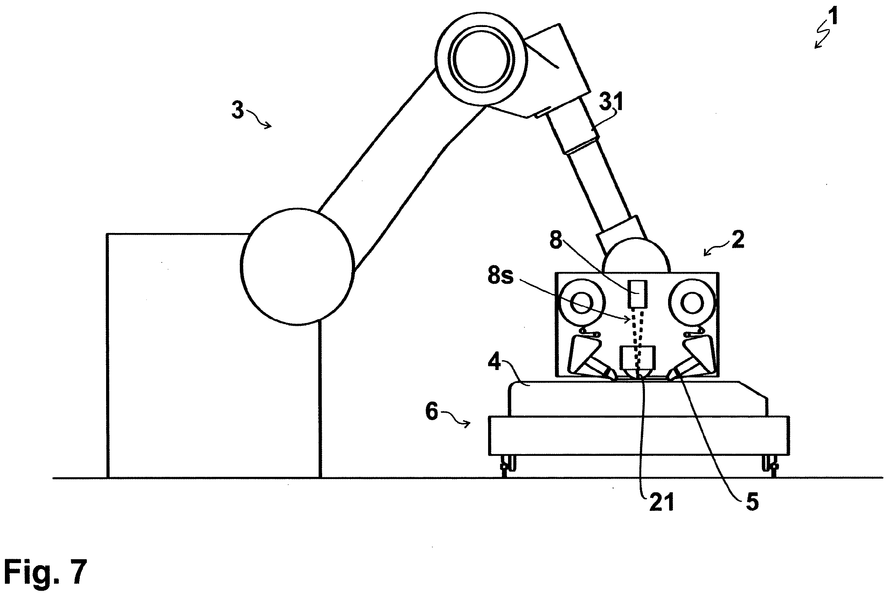

Fig. 7 zeigt ein zweites Ausführungsbeispiel der Folienprägeeinrichtung 1, bei dem die Heißprägevorrichtung 2 an dem Roboterarm 31 angeordnet ist und das Prägerad 21 auf das Werkstück 4 gepresst wird, das auf der als eine Transport-und Lagereinrichtung ausgebildeten Lagereinrichtung 6 angeordnet ist.

Auf der Heißprägevorrichtung 2 ist eine Positionierungseinrichtung 8 zur lagegenauen Positionierung der Heißprägevorrichtung 2 in Bezug auf das Werkstück 3 angeordnet. Bei dem Werkstück 4 kann es sich um ein plattenförmiges Werkstück handeln, dessen Kantenbereich mit der Übertragungslage der Heißprägefolie 5 dekoriert wird. Die Positionierungseinrichtung 8 kann Steuersignale für den Industrieroboter 3 und/oder die Steuerungseinheit 7 ausgeben.

Die Positionierungseinrichtung 8 ist in dem in Fig. 7 dargestellten Beispiel als eine optische Positionierungseinrichtung ausgebildet. Der von der Positionierungseinrichtung 8 ausgehende und von dem Werkstück 4 reflektierte Strahl ist mit 8s bezeichnet. Es kann sich dabei um einen Laserstrahl handeln. Die Positionierungseinrichtung 8 kann auch an dem Roboterarm 31 angeordnet sein oder in den Roboterarm integriert sein. Wenn es sich um eine bildgebende Positionierungseinrichtung handelt, kann die Positionierungseinrichtung 8 auch als separate Einrichtung ausgebildet sein, die beispielsweise so montiert ist, dass sie den Industrieroboter 3 und die Lagereinrichtung 6 bildmäßig erfasst.

Jedoch kann die Positionierung ebenso über die Raumkoordinaten im Arbeitsbereich des Industrieroboters 3 steuerungstechnisch realisiert werden.

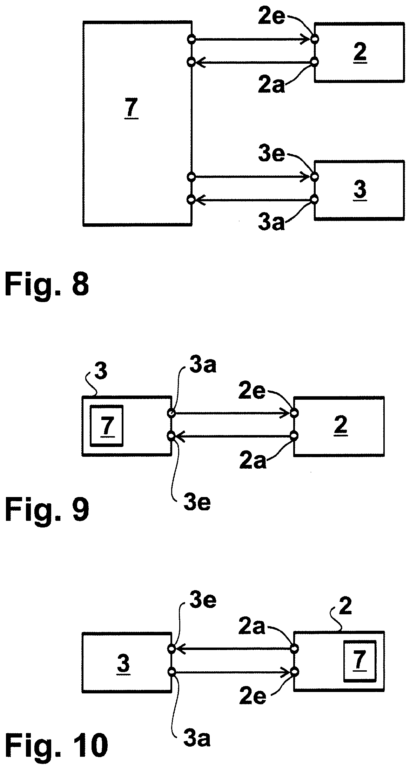

Fig. 8 zeigt ein Blockschaltbild eines ersten Ausführungsbeispiels einer Steuerungseinheit 7.

Die Steuerungseinheit 7 ist als eine zentrale Steuerungseinheit ausgebildet. Die Heißprägvorrichtung 2 und der Industrieroboter 3 sind über Steuerungseingänge 2e bzw. 3e und Steuerungsausgänge 2a bzw. 3a mit der Steuerungseinheit 7 verbunden. Durch Programmierung der Steuerungseinheit 7 kann die Folienprägeeinrichtung 1 beispielsweise auf die Geometrie des Werkstücks 4 und die Materialeigenschaften der Heißprägefolie 5 eingestellt werden. Die Steuerungseinheit 7 arbeitet als ein sogenannter "Master" und die Heißprägvorrichtung 2 und der Industrieroboter 3 arbeiten als sogenannter "Slave". Der "Master" ist die übergeordnete Steuerungseinheit, der Aktionskommandos an als "Slave" bezeichnete untergeordnete Steuerungseinheiten gibt und durchgeführte Aktion abfragt.

Es ist auch möglich, dass auf eine separate Steuerungseinheit verzichtet wird und stattdessen der Industrieroboter 3 oder die Heißprägevorrichtung 2 als "Master" arbeiten. In diesen Fällen ist die Steuerungseinheit 7 in den Industrieroboter 3 oder die Heißprägevorrichtung 2 integriert, wie Fig. 9 und 10 zeigen.

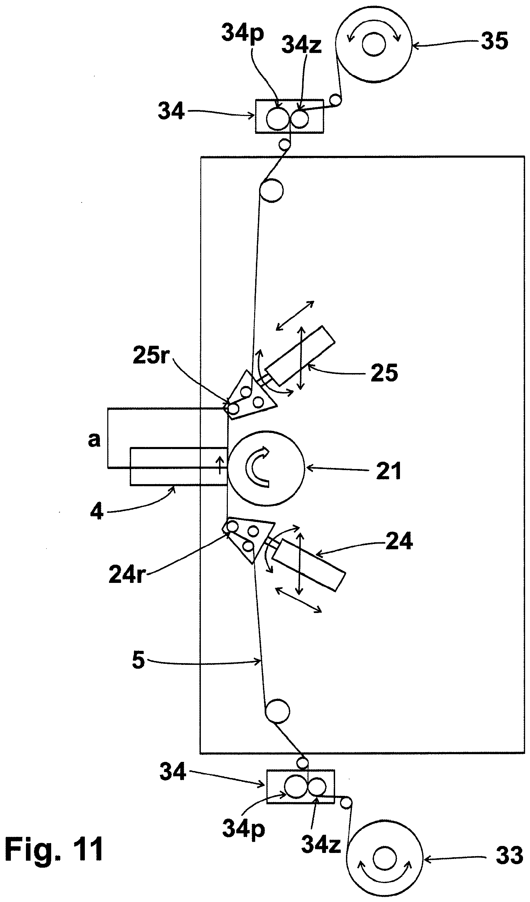

Fig. 11 zeigt einen optionalen schematischen Aufbau der Heißprägevorrichtung 2 im Einzelnen.

Die Heißprägefolie 5 ist auf einer Abwickelrolle 33 angeordnet und durchläuft sodann das erste Zugwerk 34. Bei dem Zugwerk 34 handelt es sich um eine Vorrichtung, die den Folienzug konstant hält, bzw. ein Vorwickeln und oder Rückwickeln der Heißprägefolie 5 ermöglicht. Das Zugwerk 34 weist eine anstellbare Presswalze 34p und eine Zugwalze 34z auf, die über einen Riementrieb, welcher mit einem Motor verbunden ist, angetrieben werden. Stromabwärts hinter dem Zugwerk 34 ist ein erster Folienführungshebel 24 angeordnet. Der Folienführungshebel 24 ist an seinem einen Endabschnitt schwenkbar gelagert und weist an seinem anderen Endabschnitt ein oder mehrere Führungsrollen 24r auf, über welche die Heißprägefolie 5, optional anhand der jeweiligen Anforderungen, beispielsweise der jeweiligen Teilegeometrie, geführt ist. Der Folienführungshebel 24 ist in seiner Länge verstellbar, wie in Fig. 6 durch einen geraden Richtungspfeil angedeutet.

Der Folienführungshebel 24 legt die Heißprägefolie 5 bereits vor dem Prägerad 21 an das Werkstück 4 an. Der Folienführungshebel 24 kann als ein gefederter, pneumatisch verstellbarer, elektrisch verstellbarer und/oder hydraulisch verstellbarer Hebel ausgebildet sein oder mittels einer elektronisch steuerbaren Stelleinrichtung verschwenkt und/oder entlang seiner Längsachse ein- und ausgefahren werden. Bei Kurvenfahrten sorgt der Folienführungshebel 24 dafür, dass die Heißprägefolie 5 um den kompletten Eckenradius des Werkstücks 4 mit entsprechender Vor- und Nachlaufstrecke anliegt und geprägt werden kann.

Stromabwärts hinter dem Folienführungshebel 24 ist das Prägerad 21 angeordnet. Das beheizte Prägerad 21 erwärmt die zwischen dem Prägerad 21 und dem Werkstück 4 hindurch geführte Heißprägefolie 5, so dass ein auf der Übertragungslage 51 aufgebrachter thermoplastischer Kleber aktiviert wird sowie gegebenenfalls eine optionale Ablöseschicht zwischen der Trägerfolie 52 und der Übertragungslage 51 aktiviert wird und die Übertragungslage 51 auf dem Werkstück 4 fixiert wird. Wenn es sich um ein unprofiliertes Prägerad 21 handelt, kann die gesamte Übertragungslage 51 auf das Werkstück 4 übertragen werden, beispielsweise um die Kanten eines Paneels zu dekorieren. Dabei kann jedoch die Übertragungslage 51 jedoch auch nur teilweise auf das Werkstück 4 übertragen werden, wenn beispielsweise die Kante am Werkstück 4 etwas schmaler ist als die Heißprägefolie 5, was vorteilhaft sein kann, um Toleranzen bei der Zuführung der Heißprägefolie 5 zu dem Prägerad 21 auszugleichen. Es kann aber auch ein profiliertes Prägerad 21 vorgesehen sein, das nur Bereiche der Übertragungslage 51 auf das Werkstück 4 überträgt. Die übertragenen Bereiche können beispielsweise ein Muster bilden.

Die Umfangsgeschwindigkeit des Prägerades 21 ist betragsmäßig der Vorschubgeschwindigkeit der Heißprägefolie 5 und des Werkstücks 4 gleich, das heißt die Relativgeschwindigkeit zwischen den genannten Komponenten ist gleich Null.

Stromabwärts hinter dem Prägerad 21 ist ein zweiter Folienführungshebel 25 angeordnet. An einer Führungsrolle 25r des zweiten Folienführungshebels 25 wird die Trägerfolie 52 von der auf das Werkstück 4 übertragenen Übertragungsschicht 51 abgelöst, wobei gleichzeitig nicht übertragene Bereiche der Übertragungsschicht 51 abgelöst werden. Zwischen der Trägerfolie 52 und der applizierten Übertragungsschicht 51 ist ein Ablösewinkel α ausgebildet, der beispielsweise im Bereich von 8° bis 135°, bevorzugt 10° bis 90° liegen kann. Der einzustellende Ablösewinkel α kann von den Materialeigenschaften und/oder der Vorschubgeschwindigkeit der Heißprägefolie 5 abhängen. Der Abstand zwischen der Führungsrolle 25r und einem zwischen dem Prägerad 21 und der Heißprägefolie 5 ausgebildeten linienförmigen Kontaktbereich bildet die weiter oben beschriebene Abkühlstrecke a.

Stromabwärts hinter dem zweiten Folienführungshebel 25 sind ein zweites Zugwerk 34 und eine Aufwickelrolle 35 angeordnet.

In der Fig. 11 sind die Tänzer 23 durch Zugwerke 34 ersetzt. Tänzer sind üblicherweise nicht regelbar. Man stellt den gewünschten Zug über die mechanische Aufhängung des Tänzers einmalig ein. Die Zugwerke 34 dagegen sind elektronisch fein bzgl. Zugkraft und ggf. auch im Zeitverlauf der Kraft regelbar. Es hat sich gezeigt, dass insbesondere beim Prägen von runden Werkstücken 4 die Abkühlstrecke der Folie 5 auf dem Teil nicht ausreicht. Beim Prägen von runden Teilen existiert nur eine Linienberührung zwischen Prägerad 21 und Werkstück. Ist die Folie 5 durch die Tänzer 23 gespannt, dann löst die Folie 5 fast direkt nach der Linienberührung ab, wodurch praktisch keine Abkühlstrecke vorhanden ist und die Prägung leidet. Verringert man manuell den Folienzug, so bleibt die Folie 5 praktisch lose am geprägten Werkstück 4 als Schlaufe hängen und es bildet sich eine Abkühlstrecke. Erst nach einer Weile löst sich die Folie 5 fast von selbst von dem Werkstück 4. Dies kann durch das Zugwerk gesteuert werden, d.h. der Folienzug wird zeitlich variiert, damit sich diese Abkühlstrecke je nach Teilegeometrie bestmöglich bildet. Dabei ist vor allem das zweite Zugwerk 34 (beim Aufwickeln) entscheidend. Das erste Zugwerk in der Folienzuführung ist nur optional und könnte durch einen Tänzer ersetzt sein. Hier ist die feine Steuerung weniger wichtig.

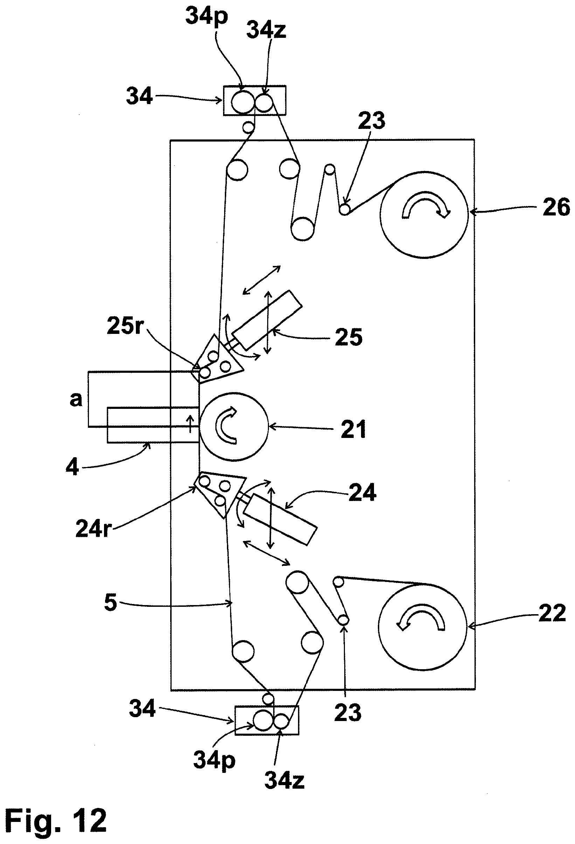

Fig. 12 zeigt einen weiteren optionalen schematischen Aufbau der Heißprägevorrichtung 2 im Einzelnen.

Die Heißprägefolie 5 ist auf einer Vorratsrolle 22 angeordnet und durchläuft sodann einen ersten Tänzer 23. Bei dem Tänzer 23 handelt es sich um eine Vorrichtung, die den Folienzug konstant hält. Der Tänzer 23 weist eine gestellfeste Umlenkrolle und eine gefederte Umlenkrolle auf, die von der Heißprägefolie 5 S-förmig umschlungen sind. Stromabwärts hinter dem Tänzer 23 ist das erste Zugwerk 34 angeordnet. Bei dem Zugwerk 34 handelt es sich um eine Vorrichtung, die den Folienzug konstant hält, bzw. ein Vorwickeln und oder Rückwickeln der Heißprägefolie 5 ermöglicht. Das Zugwerk 34 weist eine anstellbare Presswalze 34p und eine Zugwalze 34z auf, die über einen Riementrieb, welcher mit einem Motor verbunden ist, angetrieben wird. Stromabwärts hinter dem Zugwerk 34 ist ein erster Folienführungshebel 24 angeordnet. Der Folienführungshebel 24 ist an seinem einen Endabschnitt schwenkbar gelagert und weist an seinem anderen Endabschnitt ein oder mehrere Führungsrollen 24r auf, über welche die Heißprägefolie 5 optional anhand der Anforderungen geführt ist. Der Folienführungshebel 24 ist in seiner Länge verstellbar, wie in Fig. 6 durch einen geraden Richtungspfeil angedeutet.

Der Folienführungshebel 24 legt die Heißprägefolie 5 bereits vor dem Prägerad 21 an das Werkstück 4 an. Der Folienführungshebel 24 kann als ein gefederter, pneumatisch verstellbarer, elektrisch verstellbarer und/oder hydraulisch verstellbarer Hebel ausgebildet sein oder mittels einer elektronisch steuerbaren Stelleinrichtung verschwenkt und/oder entlang seiner Längsachse ein- und ausgefahren werden. Bei Kurvenfahrten sorgt der Folienführungshebel 24 dafür, dass die Heißprägefolie 5 um den kompletten Eckenradius des Werkstücks 4 mit entsprechender Vor- und Nachlaufstrecke anliegt und geprägt werden kann.

Stromabwärts hinter dem Folienführungshebel 24 ist das Prägerad 21 angeordnet. Das beheizte Prägerad 21 erwärmt die zwischen dem Prägerad 21 und dem Werkstück 4 hindurch geführte Heißprägefolie 5, so dass ein auf der Übertragungslage 51 aufgebrachter thermoplastischer Kleber aktiviert wird, gegebenenfalls eine optionale Ablöseschicht zwischen der Trägerfolie 52 und der Übertragungslage 51 aktiviert wird und die Übertragungslage 51 auf dem Werkstück 4 fixiert wird. Wenn es sich um ein unprofiliertes Prägerad 21 handelt, kann die gesamte Übertragungslage 51 auf das Werkstück 4 übertragen werden, beispielsweise um die Kanten eines Paneels zu dekorieren. Dabei kann jedoch die Übertragungslage 51 jedoch auch nur teilweise auf das Werkstück 4 übertragen, wenn beispielsweise die Kante am Werkstück 4 etwas schmaler ist als die Heißprägefolie 5, was vorteilhaft sein kann, um Toleranzen bei der Zuführung der Heißprägefolie 5 zu dem Prägerad 21 auszugleichen. Es kann aber auch ein profiliertes Prägerad 21 vorgesehen sein, das nur Bereiche der Übertragungslage 51 auf das Werkstück 4 überträgt. Die übertragenen Bereiche können beispielsweise ein Muster bilden.

Die Umfangsgeschwindigkeit des Prägerades 21 ist betragsmäßig der Vorschubgeschwindigkeit der Heißprägefolie 5 und des Werkstücks 4 gleich, das heißt die Relativgeschwindigkeit zwischen den genannten Komponenten ist gleich Null.

Stromabwärts hinter dem Prägerad 21 ist ein zweiter Folienführungshebel 25 angeordnet. An einer Führungsrolle 25r des zweiten Folienführungshebels 25 wird die Trägerfolie 52 von der auf das Werkstück 4 übertragenen Übertragungsschicht 51 abgelöst, wobei gleichzeitig nicht übertragene Bereiche der Übertragungsschicht 51 abgelöst werden. Zwischen der Trägerfolie 52 und der applizierten Übertragungsschicht 51 ist ein Ablösewinkel α ausgebildet, der beispielsweise im Bereich von 8° bis 135°, bevorzugt 10° bis 90° liegen kann. Der einzustellende Ablösewinkel α kann von den Materialeigenschaften und/oder der Vorschubgeschwindigkeit der Heißprägefolie 5 abhängen. Der Abstand zwischen der Führungsrolle 25r und einem zwischen dem Prägerad 21 und der Heißprägefolie 5 ausgebildeten linienförmigen Kontaktbereich bildet die weiter oben beschriebene Abkühlstrecke a.

Stromabwärts hinter dem zweiten Folienführungshebel 25 sind ein zweites Zugwerk 34, ein zweiter Tänzer 23 und eine Aufwickelrolle 26 angeordnet.

Es ist möglich, dass für die steuerungstechnische Kommunikation ein BusSystem verwendet wird, das eine permanente Kommunikation einschließlich eines Soll-Ist-Vergleichs zwischen den einzelnen Steuerungskomponenten ermöglicht. Dadurch können die Bewegung des Prägerades 21, der Heißprägefolie 5, des Roboterarms 31 und des Führungshebels 24r in Echtzeit koordiniert werden.

### Bezugszeichenliste

- 1: Folienprägeeinrichtung
- 2: Heißprägevorrichtung
- 2a: Steuerungsausgang
- 2e: Steuerungseingang
- 3: Industrieroboter
- 3a: Steuerungsausgang
- 3e: Steuerungseingang
- 4: Werkstück
- 5: Heißprägefolie
- 6: Lagereinrichtung
- 7: Steuerungseinheit
- 8: Positionierungseinrichtung
- 8s: optischer Strahl
- 21: Prägerad
- 22: Vorratsrolle
- 23: Tänzer
- 24: erster Folienführungshebel
- 24r: Führungsrolle
- 25: zweiter Folienführungshebel
- 25r: Führungsrolle
- 26: Aufwickelrolle
- 31: Roboterarm
- 32: Werkstückaufnahme
- 32a: Werkstückausstoßer
- 32k: Klemmzylinder
- 32s: Vakuumsauger
- 33: Abwickelrolle (Vorratsrolle)
- 34: Zugwerk
- 34p: Presswalze
- 34z: Zugwalze
- 35: Aufwickelrolle
- 51: Übertragungslage
- 52: Trägerfolie
- a: Abkühlstrecke
- α: Ablösewinkel

## Patentansprüche

1. Folienprägeeinrichtung (1) zur Übertragung einer auf einer Trägerfolie (52) angeordnete Übertragungslage (51) einer Heißprägefolie (5) auf eine Oberfläche eines Werkstücks (4) mit einer Heißprägevorrichtung (2), die einen beheizbaren Prägestempel (21) aufweist, wobei die Heißprägevorrichtung (2) steuerungstechnische Ein- und Ausgänge aufweist, wobei
die Folienprägereinrichtung (1) einen Industrieroboter (3) mit steuerungstechnischen Ein- und Ausgängen aufweist,
dass die steuerungstechnischen Ein- und Ausgänge der Heißprägevorrichtung (2) und des Industrieroboters (3) mit einer Steuerungseinheit (7) verbunden sind, und
dass der Industrieroboter (3) so ausgebildet ist, dass er
- das Werkstück (4) der Heißprägevorrichtung (2) zuführt,
- das Werkstück (4) auf dem Prägestempel (21) positioniert und/oder an dem Prägestempel (21) entlangführt, und
- das geprägte Werkstück von der Heißprägevorrichtung (2) abführt,
oder
- die Heißprägevorrichtung (2) dem Werkstück (4) zuführt,
- den Prägestempel (21) auf dem Werkstück (4) positioniert und/oder an dem Werkstück (4) entlangführt, und
- die Heißprägevorrichtung (2) von dem geprägten Werkstück (4) abführt,
und wobei die Heißprägevorrichtung (2) einen stromaufwärts vor dem Prägestempel (21) angeordneten ersten Folienführungshebel (24) mit einer Folienführungsrolle (24r) und einen stromabwärts hinter dem Prägestempel (21) angeordneten zweiten Folienführungshebel (25) mit einer Folienführungsrolle (25r) aufweist, die mit dem Industrieroboter (3) zusammenwirken.

2. Folienprägeeinrichtung nach Anspruch 1,
**dadurch gekennzeichnet,**
**dass** der Industrieroboter (3) weiter so ausgebildet ist, dass er die Trägerfolie (52) von der auf das Werkstück (4) übertragenen Übertragungslage (51) abzieht.

3. Folienprägeeinrichtung nach einem der vorangehenden Ansprüche, **dadurch gekennzeichnet,**
**dass** die Folienführungshebel (24, 25) als gefedert gelagerte und/oder längenverstellbare Schwenkhebel ausgebildet sind, oder als Schwenkhebel ausgebildet sind, die mittels einer elektronisch steuerbaren Stelleinrichtung verschwenkbar und/oder längenverstellbar sind.

4. Folienprägeeinrichtung nach einem der Ansprüche 1 bis 3,
**dadurch gekennzeichnet,**
**dass** die Folienführungsrolle (25r) des zweiten Folienführungshebels (25) als eine Ablösekante wirkt, über welche die von der Übertragungslage (51) abgelöste Trägerfolie (52) abgeführt wird, wobei insbesondere zwischen der Trägerfolie (52) und der Übertragungsschicht (51) ein Ablösewinkel (α) ausgebildet ist, der im Bereich von 8° bis 135°, bevorzugt von 10° bis 90° liegt.

5. Folienprägeeinrichtung nach einem der vorangehenden Ansprüche, **dadurch gekennzeichnet,**
**dass** der Prägestempel als ein Prägerad (21) ausgebildet ist, welches insbesondere derart ausgebildet ist, dass es synchron zu dem Vorschub der Heißprägefolie (5) und des Werkstücks (4) rotiert.

6. Folienprägevorrichtung nach einem der vorangehenden Ansprüche, **dadurch gekennzeichnet,**
**dass** zwischen dem Prägestempel (21) und dem zweiten Folienführungshebel (25) eine Abkühlstrecke (a) ausgebildet ist.

7. Folienprägeeinrichtung nach einem der vorangehenden Ansprüche, **dadurch gekennzeichnet,**
**dass** der Industrieroboter (3) einen Roboterarm (31) mit 4 bis 15 Freiheitsgraden aufweist, vorzugsweise mit fünf bis sieben Freiheitsgraden aufweisen.

8. Folienprägeeinrichtung nach Anspruch 7,
**dadurch gekennzeichnet,**
**dass** der Roboterarm (31) eine Werkstückaufnahme (32) zur Aufnahme des Werkstücks (4) aufweist.

9. Folienprägeeinrichtung nach Anspruch 8,
**dadurch gekennzeichnet,**
**dass** die Werkstückaufnahme (32) als ein in das Werkstück (4) eingreifender Balken ausgebildet ist.

10. Folienprägeeinrichtung nach Anspruch 8 oder 9,
**dadurch gekennzeichnet,**
**dass** die Werkstückaufnahme (32) Vakuumsauger (32s) aufweist, die mit der Innenseite des Werkstücks (4) zusammenwirken und/oder Klemmzylinder (32k) und/oder Werkstückausstoßer (32a) aufweist, die mit der Innenseite des Werkstücks (4) zusammenwirken.

11. Folienprägeeinrichtung nach einem der Ansprüche 8 bis 10,
**dadurch gekennzeichnet,**
**dass** die Werkstückaufnahme (32) und/oder das Werkstück (4) Führungselemente und/oder Sensoren aufweisen bzw. aufweist, die eine reproduzierbare Lagezuordnung zwischen der Werkstückaufnahme (32) und dem Werkstück (4) herbeiführen.

12. Folienprägeeinrichtung nach Anspruch 7,
**dadurch gekennzeichnet,**
**dass** an dem Roboterarm (31) die Heißprägevorrichtung (2) angeordnet ist.

13. Folienprägeeinrichtung nach Anspruch 12,
**dadurch gekennzeichnet,**
**dass** an dem Roboterarm (31) und/oder an der Heißprägevorrichtung (2) eine Positionierungseinrichtung (8) angeordnet ist.

14. Folienprägeeinrichtung nach einem der vorangehenden Ansprüche, **dadurch gekennzeichnet,**
**dass** die Steuerungseinheit (7) so ausgestaltet ist, dass sie den Industrieroboter (3) so ansteuert, dass das Werkstück (4) während des Prägens mit zumindest abschnittweise und/oder zeitweise konstanter Kraft auf den Prägestempel (21) gedrückt wird oder umgekehrt.

15. Folienprägeeinrichtung nach Anspruch 14,
**dadurch gekennzeichnet,**
**dass** ein Drucksensor, der mit der Steuerungseinheit (7) verbunden ist, an dem Roboterarm (31) und/oder an der Werkstückaufnahme (32) angeordnet ist.

## Claims

1. Foil stamping device (1) for transferring a transfer layer (51) of a hot stamping foil (5) said transfer layer being arranged on a carrier foil (52) onto a surface of a workpiece (4) having a hot stamping device (2) that has a heatable embossing stamp (21), wherein the hot stamping device (2) has control technical inputs and outputs, wherein the foil stamping device (1) has an industrial robot (3) having control technical inputs and outputs,
the control technical inputs and outputs of the hot stamping device (2) and the industrial robot (3) are connected to a control unit (7), and
the industrial robot(3) is formed in such a way that it
- supplies the workpiece (4) to the hot stamping device (2),
- positions the workpiece (4) on the embossing stamp (21) and/or leads the workpiece (4) along the embossing stamp (21), and
- leads the stamped workpiece away from the hot stamping device (2), or
- supplies the hot stamping device (2) to the workpiece (4),
- positions the embossing stamp (21) on the workpiece (4) and/or leads the embossing stamp along the workpiece (4), and
- leads the hot stamping device (2) away from the stamped workpiece (4),
and wherein the hot stamping device (2) has a first foil guiding lever (24) arranged upstream before the embossing stamp (21) with a foil guide roller (24r) and a second foil guiding lever (25) arranged downstream behind the embossing stamp (21) with a foil guide roller (25r), which interact with the industrial robot (3).

2. Foil stamping device according to claim 1,
**characterised in that**
the industrial robot (3) is further formed in such a way that it removes the carrier foil (52) from the transfer layer (51) transferred on the workpiece (4).

3. Foil stamping device according to one of the preceding claims,
**characterised in that**
the foil guiding levers (24, 25) are formed as spring mounted and/or length adjustable pivot levers, or are formed as pivot levers that are able to be pivoted and/or length adjusted by means of an electronically controllable actuator.

4. Foil stamping device according to one of claims 1 to 3,
**characterised in that**
the foil guide roller (25r) of the second foil guiding lever (25) acts as a detaching edge, via which the carrier foil (52) detached from the transfer layer (51) is led away, wherein a detaching angle (α) is formed in particular between the carrier foil (52) and the transfer layer (51), said angle ranging from 8° to 135°, preferably from 10° to 90°.

5. Foil stamping device according to one of the preceding claims,
**characterised in that**
the embossing stamp is formed as an embossing wheel (21) which is formed in such a way in particular that it rotates synchronously with the feed of the hot stamping foil (5) and the workpiece (4).

6. Foil stamping device according to one of the preceding claims,
**characterised in that**
a cooling section (a) is formed between the embossing stamp (21) and the second foil guiding lever (25).

7. Foil stamping device according to one of the preceding claims,
**characterised in that**
the industrial robot (3) has a robot arm (31) with 4 to 15 degrees of freedom, preferably with five to seven degrees of freedom.

8. Foil stamping device according to claim 7,
**characterised in that**
the robot arm (31) has a workpiece receiver (32) for receiving the workpiece (4).

9. Foil stamping device according to claim 8,
**characterised in that**
the workpiece receiver (32) is formed as a beam engaging with the workpiece (4).

10. Foil stamping device according to claim 8 or 9,
**characterised in that**
the workpiece receiver (32) has vacuum suction cups (32s) which interact with the inside of the workpiece (4) and/or clamping cylinder (32k) and/or workpiece ejector (32a), which engage together with the inside of the workpiece (4).

11. Foil stamping device according to one of claims 8 to 10,
**characterised in that**
the workpiece receiver (32) and/or the workpiece (4) have or has guiding elements and/or sensors which bring about a reproducible layer arrangement between the workpiece receiver (32) and the workpiece (4).

12. Foil stamping device according to claim 7,
**characterised in that**
the hot stamping device (2) is arranged on the robot arm (31).

13. Foil stamping device according to claim 12,
**characterised in that**
a positioning device (8) is arranged on the robot arm (31) and/or on the hot stamping device (2).

14. Foil stamping device according to one of the preceding claims,
**characterised in that**
the control unit (7) is formed in such a way that it controls the industrial robot (3) in such a way that the workpiece (4) is pressed onto the embossing stamp (21) during stamping by a force that is at least sectionally and/or intermittently constant, or vice versa.

15. Foil stamping device according to claim 14,
**characterised in that**
a pressure sensor that is connected to the control unit (7) is arranged on the robot arm (31) and/or on the workpiece receiver (32).

## Revendications

1. Système d'estampage de films (1) servant à transférer une couche de transfert (51), disposée sur un film de support (52), d'un film d'estampage à chaud (5) sur une surface d'une pièce (4) à l'aide d'un dispositif d'estampage à chaud (2), qui présente un poinçon d'estampage (21) pouvant être chauffé, dans lequel le dispositif d'estampage à chaud (2) présente des entrées et sorties à technique de commande, dans lequel
le système d'estampage de films (1) présente un robot industriel (3) pourvu d'entrées et de sorties à technique de commande,
les entrées et sorties à technique de commande du dispositif d'estampage à chaud (2) et du robot industriel (3) sont reliées à une unité de commande (7), et
le robot industriel (3) est réalisé de telle sorte
- qu'il amène la pièce (4) au dispositif d'estampage à chaud (2),
- qu'il positionne la pièce (4) sur le poinçon d'estampage (21) et/ou qu'il guide la pièce le long du poinçon d'estampage (21), et
- qu'il évacue la pièce estampée du dispositif d'estampage à chaud (2)
ou
- qu'il amène le dispositif d'estampage à chaud (2) à la pièce (4),
- qu'il positionne le poinçon d'estampage (21) sur la pièce (4) et/ou le guide le long de la pièce (4), et
- qu'il évacue le dispositif d'estampage (2) de la pièce (4) estampée,
et dans lequel le dispositif d'estampage à chaud (2) présente un premier levier de guidage de films (24) disposé en amont devant le poinçon d'estampage (21), pourvu d'un galet de guidage de films (24r) et un deuxième levier de guidage de films (25), disposé en aval derrière le poinçon d'estampage (21), pourvu d'un galet de guidage de films (25r), qui coopèrent avec le robot industriel (3).

2. Système d'estampage de films selon la revendication 1,
**caractérisé en ce**
**que** le robot industriel (3) est par ailleurs réalisé de telle sorte qu'il retire le film de support (52) de la couche de transfert (51) transférée sur la pièce (4).

3. Système d'estampage de films selon l'une quelconque des revendications précédentes,
**caractérisé en ce**
**que** les leviers de guidage de films (24, 25) sont réalisés sous la forme de leviers de pivotement montés sur ressorts et/ou pouvant être ajustés en longueur, lesquels peuvent être pivotés et/ou être ajustés en longueur au moyen d'un système de réglage pouvant être commandé de manière électronique.

4. Système d'estampage de films selon l'une quelconque des revendications 1 à 3,
**caractérisé en ce**
**que** le galet de guidage de films (25r) du deuxième levier de guidage de film (25) agit comme une arête de décollement, par l'intermédiaire de laquelle le film de support (52) décollé de la couche de transfert (51) est évacué, dans lequel est réalisé, en particulier entre le film de support (52) et la couche de transfert (51), un angle de décollement (α), qui se situe dans la plage allant de 8° à 135°, de manière préférée allant de 10° à 90°.

5. Système d'estampage de films selon l'une quelconque des revendications précédentes,
**caractérisé en ce**
**que** le poinçon d'estampage est réalisé sous la forme d'une roue d'estampage (21), qui est réalisée en particulier de telle manière qu'elle tourne de manière synchrone par rapport à l'avancée du film d'estampage à chaud (5) et de la pièce (4).

6. Système d'estampage de films selon l'une quelconque des revendications précédentes,
**caractérisé en ce**
**qu'**une ligne de refroidissement (a) est réalisée entre le poinçon d'estampage (21) et le deuxième levier de guidage de films (25).

7. Système d'estampage de films selon l'une quelconque des revendications précédentes,
**caractérisé en ce**
**que** le robot industriel (3) présente un bras de robot (31) pourvu de 4 à 15 degrés de liberté, de préférence pourvu de 5 à 7 degrés de liberté.

8. Système d'estampage de films selon la revendication 7,
**caractérisé en ce**
**que** le bras de robot (31) présente un logement de pièce (32) servant à loger la pièce (4).

9. Système d'estampage de films selon la revendication 8,
**caractérisé en ce**
**que** le logement de pièce (32) est réalisé sous la forme d'une poutre venant en prise avec la pièce (4).

10. Système d'estampage de films selon la revendication 8 ou 9,
**caractérisé en ce**
**que** le logement de pièce (32) présente des systèmes aspirateurs à vide (32s), qui coopèrent avec le côté intérieur de la pièce (4), et/ou présente des cylindres de serrage (32k) et/ou des éjecteurs de pièce (32a), qui coopèrent avec le côté intérieur de la pièce (4).

11. Système d'estampage de films selon l'une quelconque des revendications 8 à 10,
**caractérisé en ce**
**que** le logement de pièce (32) et/ou la pièce (4) présentent des éléments de guidage et/ou des capteurs, qui provoquent une association de position reproductible entre le logement de pièce (32) et la pièce (4).

12. Système d'estampage de films selon la revendication 7,
**caractérisé en ce**
**que** le dispositif d'estampage à chaud (2) est disposé au niveau du bras de robot (31).

13. Système d'estampage de films selon la revendication 12,
**caractérisé en ce**
**qu'**un système de positionnement (8) est disposé au niveau du bras de robot (31) et/ou au niveau du dispositif d'estampage à chaud (2).

14. Système d'estampage à chaud selon l'une quelconque des revendications précédentes,
**caractérisé en ce**
**que** l'unité de commande (7) est configurée de telle sorte qu'elle pilote le robot industriel (3) de telle sorte que la pièce (4) est poussée, au cours de l'estampage, avec une force au moins par endroits et/ou par intermittence constante, sur le poinçon d'estampage (21), et inversement.

15. Système d'estampage de films selon la revendication 14,
**caractérisé en ce**
**qu'**un capteur de pression, qui est relié à l'unité de commande (7), est disposé au niveau du bras de robot (31) et/ou au niveau du logement de pièce (32).
